# EUROPÄISCHE PATENTSCHRIFT

(11) **EP 0 453 809 B1**
(45) Veröffentlichungstag und Bekanntmachung des Hinweises auf die Patenterteilung: **24.11.1993**
(21) Anmeldenummer: 91104975.7
(22) Anmeldetag: 28.03.1991
(51) Int. Cl.: F25C 1/08

(54) **Vorrichtung zur Herstellung von Klareisstücken**
Device for producing clear ice lumps
Dispositif pour la fabrication de morceaux de glace transparente

(30) Priorität: 14.04.1990 DE 4012249
(43) Veröffentlichungstag der Anmeldung: 30.10.1991
(73) Patentinhaber: Gaggenau-Werke Haus- und Lufttechnik GmbH, D-76571 Gaggenau (DE)
(72) Erfinder:
(74) Vertreter: Moser, Herbert, Dr.-Ing. Patentanwalt

(56) Entgegenhaltungen:
- EP-A- 0 333 887
- DE-U- 9 004 370
- GB-A- 2 189 016
- US-A- 2 718 125
- US-A- 3 433 030

## Beschreibung

Die Erfindung betrifft eine Vorrichtung zur Herstellung von Klareisstücken, insbesondere zur Benutzung in Verbindung mit Kühl- oder Gefriergeräten, bei der in einer Wanne eine Wasserströmung erzeugt wird, welche Kühlfinger zum Ansatz der Eisstücke umspült und bei der die Kühlfinger mit einer mit tiefgekühltem Kältemedium gespeisten Kältemittelleitung in wärmeleitender Verbindung stehen, wobei ferner eine elektrische Heizvorrichtung zum Beheizen der Kühlfinger beim Loslösen der Klareisstücke vorgesehen ist (Siehe z.B. die US-A-2718125).

Durch die deutsche Gebrauchsmusterschrift 88 12 951 und durch die deutsche Patentschrift 38 35 132 ist eine Vorrichtung zur Herstellung von Klareisstücken bekannt, bei der in einer durch einen Schaukelantrieb bewegbaren Wanne eine hin- und hergehende Wasserströmung erzeugt wird, welche die in die Wanne hineinragenden mit der Kältemittelleitung einer Kühlvorrichtung verbundenen Kühlfinger zum Ansatz der Eisstücke umspült, und bei der die Eisbildung gezielt von den Kühlfingern ausgehend erfolgt.

Eine schwenkbare Wanne mit Restwasserspeicherbehälter ist in der deutschen Patentschrift 32 16 597 beschrieben.

Das Loslösen der an den Kühlfingern festgefrorenen hohlen Klareisstücke wird in bekannter Weise durch Beheizen der Kühlfinger durchgeführt. Eine Beheizung der in einzelnen Kompartments einer Wanne erzeugten Klareisstücke zur Ablösung nach Beendigung des Gefriervorgangs ist u.a. in der europäischen Patentschrift 0 333 887 beschrieben.

Aus der deutschen Patentschrift 33 14 056 ist ein Gefriergerät, insbesondere ein Gefrierschrank bekannt, bei dem das Verdampfersystem in wenigstens zwei Verdampferabschnitte unterteilt ist, die thermisch getrennten Abteilen des Gehäuses zugeordnet sind. Dabei ist mindestens ein Verdampferabschnitt durch eine steuerbare Umgehungsleitung überbrückbar, und dem überbrückten Verdampferabschnitt ist ein weiterer Verdampfer zugeordnet, dessen wirksame Oberfläche gegenüber derjenigen des überbrückten Verdampferabschnitts wesentlich kleiner ist. Dadurch sollen die durch den schwankenden Beladungszustand und Ausnutzungsgrad entstehenden Nachteile durch eine ökonomische Anpassung der Verdampferleistung an den Beladungszustand ausgeglichen werden. Die Umschaltung erfolgt durch Dreiwege-Magnetventile. Eine Umschaltung des Kältemittelflusses zwischen zwei jeweils einzeln eingeschalteten Verdampfern ist in der deutschen Patentschrift 30 24 590 beschrieben. Dabei handelt es sich um ein Haushaltskühl- oder Gefriergerät, bei dem außer dem Abteil zum Einlagern von Kühlgut ein weiteres Abteil zur Bereitung von gekühltem Trinkwasser vorgesehen ist. Der eine Verdampfer ist dem Abteil für Kühlgut und der andere Verdampfer dem Abteil zur Vorratshaltung gekühlten Trinkwassers zugeordnet.

Durch die US-A-2 718 125 ist ein Gefriergerät zum Erzeugen von Eishohlkörpern in Verbindung mit einem Kühlschrank bekannt, bei dem das Kältemittel des Kühlschrank-Kältemittelkreislaufs durch Hohlräume in Kühlfingern des Eiserzeugers strömt. Dabei werden die Hohlräume zwischen einem zylindrischen Mantel des Kühlfingers und einen darin angeordneten Einsatz gebildet, der in einer längsachsparallelen Bohrung ein Heizelement aufweist, das sich nahezu entlang der gesamten Länge des jeweiligen Kühlfingers erstreckt. Zur Ablösung der durch Umspülung mit Wasser gebildeten Klareisstücke von den Kühlfingern werden die Heizelemente zeitgesteuert eingeschaltet, wobei sich die von den Heizelementen erzeugte Wärme auch auf das Kältemittel überträgt. Dies bedingt einen relativ hohen Energieverbrauch.

Die Erfindung geht von der Aufgabenstellung aus, eine Vorrichtung der eingangs beschriebenen Art, insbesondere zur Verwendung in Verbindung mit Kühl-oder Gefriergeraten so auszubilden, daß bei geringem zusatzlichen Kältemittelverbrauch eine Erzeugung von einwandfrei klaren Eisstücken erreicht wird.

Zur Lösung dieser Aufgabenstellung ist vorgesehen, daß zwischen Kältemittelleitung und Kühlfinger eine Wärmesperre eingeschaltet ist, und daß die elektrische Heizvorrichtung hinter der Wärmesperre liegt. Eine solche Ausbildung bietet den Vorteil, daß die Kühlfinger nicht durch unmittelbaren Wärmekontakt mit der Kältemittelleitung, welche ein bis zu -30°C kaltes Kältemedium enthält, zu stark abgekühlt werden, und daß damit die Oberflächentemperatur der Kühlfinger nicht unter einen für die Klareisherstellung günstigen unteren Grenzwert, insbesondere von -10°C absinkt. Außerdem läßt sich die zur Einhaltung einer solchen Temperaturgrenze evtl. erforderliche zusätzliche Beheizung mit verringerter Rückwirkung auf die Kältemittelleitung und damit geringerem Aufwand an Kälteleistung durchführen.

Der Begriff "Wärmesperre" soll dabei einstückige oder zusammengesetzte Wärmedämmelemente umfassen, welche den Wärmeübergang von der Kältemittelleitung zu dem Gefrierabschnitt des Kühlfingers vermindern. Anstelle einer mit tiefgekühltem Kältemedium gespeisten Kältemittelleitung kann auch eine andere, z.B. eine massiv metallene Kälteleitung, benutzt werden, welche mit einem Kälteerzeuger beliebiger Bauart in Verbindung steht.

Es kann ferner zweckmäßig sein, daß die Kühlfinger aus einem mit der Kältemittelleitung verbundenen metallenen Ansatzstück und einem mit der Heizvorrichtung verbundenen metallenen Fingerteil zusammengesetzt sind, und daß zwischen Ansatzstück und Fingerteil die Wärmesperre aus schlecht wärmeleitendem Material zwischengeschaltet ist. Damit ergibt sich einerseits eine Verminderung der Wärmeübertragung von der Kältemittelleitung auf den Gefrierabschnitt des Kühlfingers, und andererseits wird bei einer Beheizung dieses Abschnitts die unerwünschte Rückwirkung auf die Kältemittelleitung weitgehend eingeschränkt.

Bei einer solchen Ausbildung kann es vorteilhaft sein, daß das Ansatzstück mit dem Fingerteil durch eine schlecht wärmeleitende Schraubverbindung unter Zwischenlage einer Wärmedämmscheibe verbunden ist. Dabei können die Schraubverbindung, beispielsweise in Form einer Madenschraube, und/oder die Wärmedämmscheibe aus Metall, insbesondere Edelstahl, aber auch gegebenenfalls aus Kunststoff bestehen.

Die Wärmedämmscheibe kann zweckmäßig als Befestigungselement für die Heizvorrichtung ausgebildet sein, und zwar vorteilhaft derart, daß die Wärmedämmscheibe Aussparungen aufweist, in die Haltestücke eines Trageelementes zur Aufnahme einer elektrischen Heizwicklung eingreifen. Ein solches Trageelement kann zweckmäßig topfförmig, aus wärmeisolierendem Material, beispielsweise aus Kunststoff, ausgebildet sein.

In einer günstigen Ausbildung ist an dem hinter der Wärmesperre liegenden Fingerteil ein elektrisches Temperaturfühlerelement vorgesehen.

In weiterer bevorzugter Ausbildung der Erfindung kann die Kältemittelleitung wahlweise bei der Klareisbereitung mit dem Verdampfer eines Kühl- oder Gefriergerätes, insbesondere eines Haushaltskühlschranks,in Reihe geschaltet werden. Dadurch wird ein weiteres Kompressor-Kühlaggregat erspart und der vorhandene Kompressor bei der Bereitung von Klareisstücken zusätzlich ausgenutzt. Dabei erscheint es zweckmäßig, zur wahlweisen Einschaltung der Kältemittelleitung in den Kreislauf des Kühlaggregates ein Dreiwegeventil, vorzugsweise in der Ausbildung als Magnetventil, vorzusehen. Eine solche Ausbildung ergibt eine günstige zusätzliche Ausnutzung des vorhandenen Kältemittelkreislaufs bei der Eisbereitung, wobei der Kältemittelkreislauf des Haushaltskühlschranks, der gegebenenfalls ein Tiefkühl-Gefrierfach aufweist, nur während der Eisbereitung durch Einschaltung der Kältemittelleitung für die Kühlfinger zusätzlich belastet wird. Zweckmäßig ist die Kältemittelleitung dem Verdampfer des Kühl- oder Gefriergerätes in Strömungsrichtung des Kältemediums vorschaltbar.

Eine vorteilhafte Steuerschaltung, mit der an den Kühlfingern eine Gefriertemperatur oberhalb des für die Klareisbildung erforderlichen vorgegebenen Wertes, insbesondere oberhalb von -10°C, eingehalten werden kann, ist in der Weise aufgebaut, daß die Temperatur des Kühlfingers hinter der Wärmesperre durch eine die elektrische Heizvorrichtung steuernde Regelschaltung oberhalb eines unteren Grenzwertes wenigstens annähernd konstant gehalten wird. Diese Regelschaltung enthält das am Fingerteil hinter der Wärmesperre angeordnete elektrische Temperaturfühlerelement und arbeitet vorzugsweise taktweise durch Ein- und Ausschalten der elektrischen Heizvorrichtung. Derartige von einem Temperaturfühler, beispielsweise einem NTC/PTC-Element, angesteuerte Regelschaltungen zur Temperaturkonstanthaltung sind in vielen Ausführungsformen bekannt.

Durch die Merkmale der Erfindung wird erreicht, daß unter optimaler Ausnutzung der zur Verfügung stehenden Kälteleistung, z.B.eines Kompressor-Kühlaggregates,eine einwandfreie Erzeugung von Klareisstücken, insbesondere im Haushaltsmaßstab,möglich ist, ohne daß durch eine zu tiefe Temperatur an den Kühlfingern eine Mikrorißbildung und damit eine Trübung der Klareisstücke eintritt.

Die Erfindung wird nachfolgend unter Bezug auf Ausführungsbeispiele näher erläutert; aus diesen ergeben sich weitere Erfindungsmerkmale. Es zeigen:
- Fig. 1: einen Querschnitt durch einen Kühlfinger in Verbindung mit der Kältemittelleitung,
- Fig. 2: eine Draufsicht auf einen Schnitt längs der Linie II-II in Fig. 1,
- Fig. 3: ein Schema des Kältemittelflusses in einem Haushaltskühlschrank mit eingegliederter Vorrichtung zur Herstellung von Klareisstücken,
- Fig. 4: ein Schaltschema für die angegebene Steuerschaltung.

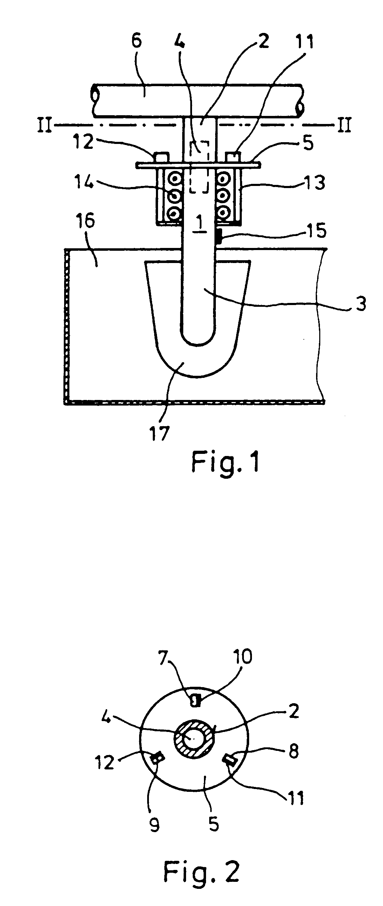

In Fig. 1 und 2 erkennt man einen Kühlfinger 1, welcher aus einem metallenen Ansatzstück 2 und einem metallenen Fingerteil 3 zusammengesetzt ist. Zwischen dem Ansatzstück 2 und dem Fingerteil 3 befindet sich eine Wärmesperre, die durch eine schlecht wärmeleitende Madenschraubverbindung 4 aus Edelstahl und eine Wärmedämmscheibe 5, gleichfalls aus Edelstahl, gebildet wird. Dadurch ist der Fingerteil unter Zwischenschaltung der Wärmesperre 4,5 an den Ansatzstück 2 und die damit metallisch verbundene Kältemittelleitung 6 angekoppelt.

In drei symmetrisch angeordnete Aussparungen 7,8,9 der Wärmedämmscheibe 5 greifen Rastnasen 10,11,12 eines topfförmigen Trageelementes 13 aus Kunststoff ein, in dem eine elektrische Heizwicklung 14 untergebracht ist.

An dem Fingerteil 3 ist ein elektrisches Temperaturfühlerelement 15 angeordnet.

Der Kühlfinger ragt zusammen mit mehreren in der Zeichnung nicht dargestellten gleichartigen Kühlfingern in eine Wanne 16, die gemäß der deutschen Gebrauchsmusterschrift 88 12 951 ausgebildet sein kann und in der bei der Klareiserzeugung eine Wasserströmung hervorgerufen wird, welche die Kühlfinger zum Ansatz der Eisstücke umspült. Ein solches Eisstück 17 ist schematisch angedeutet.

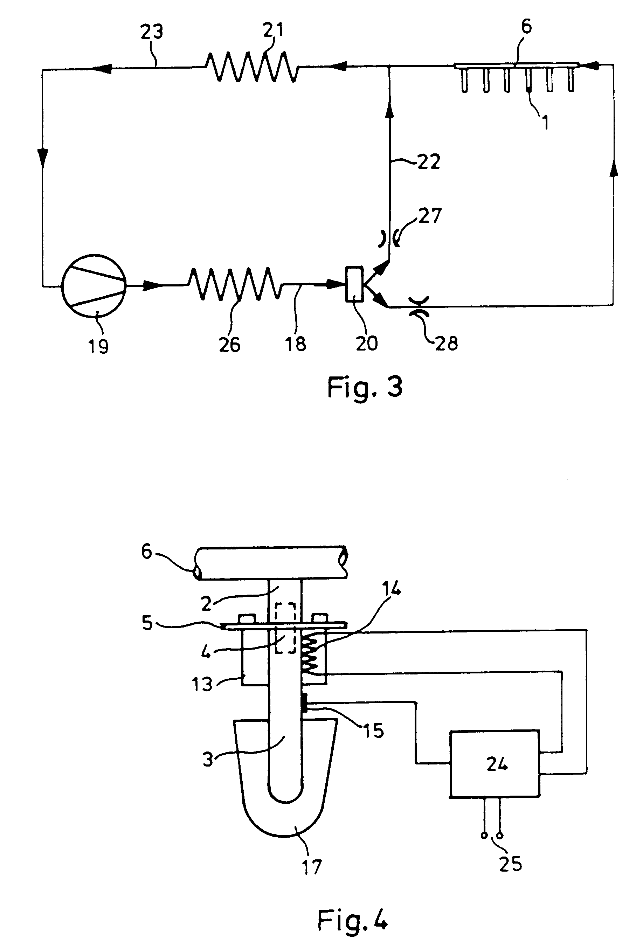

Die Kältemittelleitung 6 kann dabei wahlweise in den Kältemittelkreislauf eines Kompressor-Kühlaggregates eines Haushaltskühlschrankes eingeschaltet werden, wie dies in dem Schaltschema Fig. 3 dargestellt ist. Eine Abgangsleitung 18 des Kompressors 19 führt über den Verflüssiger 26 zu einem Dreiwege-Magnetventil 20, welches wahlweise die Kältemittelleitung 6 unter Vorschaltung einer Drosselstelle 28 mit den Kühlfingern 1 in den Kältemittel-Kreislauf des Hauptverdampfers 21 einschaltet. Ist die Vorrichtung zur Herstellung von Klareisstücken nicht eingeschaltet, so erfolgt die Zuleitung des Kältemittels durch das Dreiwege-Magnetventil 20 und eine Zuführungsleitung 22 über die Drosselstelle 27 unmittelbar zum Hauptverdampfer 21. Zur Rückführung aus dem Hauptverdampfer zum Kompressor ist die Rückführungsleitung 23 vorgesehen. Bei der Einschaltung der Kältemittelleitung 6 in den Kaltemittelkreislauf ist diese dem gegebenenfalls aus mehreren Teilstücken für Gefrier- und Normalteil zusammengesetzten Hauptverdampfer 21 vorgeschaltet.

Fig. 4 zeigt den schematischen Aufbau der Regelschaltung, wobei ein Steuergerät 24 bei der Klareiserzeugung die vom Temperaturfühlerelement 15 abgegebenen Meßwerte als Eingangsgröße aufnimmt und entsprechend die Stromzuführung zu den elektrischen Heizwicklungen 14 der Kühlfinger 1 steuert. Dabei wird in einfacher Weise eine 2-Punkt-Regelung ausgeführt. Die Spannungsversorgung des Steuergerätes 24 erfolgt über Anschlüsse 25.

Haben die Klareisstücke 17 auf den Fingerteilen 3 eine hinreichende Dicke erreicht - und dies kann in einfacher Weise durch ein mechanisch abtastendes Sensorelement festgestellt werden - so werden die elektrischen Heizwicklungen 14 durch das Steuergerät 24 solange eingeschaltet, bis durch entsprechende Beheizung der Fingerteile 3 ein Loslösen der Klareisstücke 17 eintritt und diese in einen Sammelbehälter zur Weiterleitung herabfallen.

Die Vorrichtung zur Herstellung von Klareisstücken kann entweder als getrenntes Gerät oder zweckmäßig in Verbindung mit Kühl-oder Gefriergeräten, insbesondere aus dem Haushaltsbereich, z.B. als Einbauteil für einen Haushaltskühlschrank, hergestellt werden.

## Patentansprüche

1. Vorrichtung zur Herstellung von Klareisstücken (17), insbesondere zur Benutzung in Verbindung mit Kühl- oder Gefriergeräten, bei der in einer Wanne (16) eine Wasserströmung erzeugt wird, welche Kühlfinger (1) zum Ansatz der Eisstücke umspült, und bei der die Kühlfinger (1) mit einer mit tiefgekühltem Kältemedium gespeisten Kältemittelleitung (6) in warmeleitender Verbindung stehen, wobei ferner eine elektrische Heizvorrichtung (14) zum Beheizen der Kühlfinger (1) beim Loslösen der Klareisstücke vorgesehen ist, **da****durch gekennzeichnet,** daß zwischen Kältemittelleitung (6) und Kühlfinger (1) eine Wärmesperre (4,5) eingeschaltet ist, und daß die elektrische Heizvorrichtung (14) hinter der Wärmesperre (4,5) liegt.

2. Vorrichtung nach Anspruch 1, **dadurch gekennzeichnet,** daß die Kühlfinger (1) aus einem mit der Kältemittelleitung (6) verbundenen metallenen Ansatzstück (2) und einem mit der Heizvorrichtung (14) verbundenen metallenen Fingerteil (3) zusammengesetzt sind, und daß zwischen Ansatzstück (2) und Fingerteil (3) die Wärmesperre (4,5) aus schlecht wärmeleitendem Material zwischengeschaltet ist.

3. Vorrichtung nach Anspruch 2, **dadurch gekennzeichnet,** daß das Ansatzstück (2) mit dem Fingerteil (3) durch eine schlecht wärmeleitende Schraubverbindung (4) unter Zwischenlage einer Wärmedämmscheibe (5) verbunden ist.

4. Vorrichtung nach Anspruch 3, **dadurch gekennzeichnet,** daß die Wärmedämmscheibe (5) als Befestigungselement der Heizvorrichtung (14) ausgebildet ist.

5. Vorrichtung nach Anspruch 4, **dadurch gekennzeichnet,** daß die Wärmedämmscheibe (5) Aussparungen (7,8,9) aufweist, in die Haltestücke (10,11,12) eines Trageelementes (13) zur Aufnahme einer elektrischen Heizwicklung (14) eingreifen.

6. Vorrichtung nach Anspruch 5, **dadurch gekennzeichnet,** daß das topfförmige Trageelement (13) aus wärmeisolierendem Material besteht.

7. Vorrichtung nach Anspruch 2, **dadurch gekennzeichnet,** daß an dem hinter der Wärmesperre (4,5) liegenden Fingerteil (3) ein elektrisches Temperaturfühlerelement (15) angeordnet ist.

8. Vorrichtung nach Anspruch 1, **dadurch gekennzeichnet,** daß die Kältemittelleitung (6) bei der Klareisbereitung mit dem Verdampfer (21) eines Kühl- oder Gefriergerätes in Reihe geschaltet ist.

9. Vorrichtung nach Anspruch 8, **dadurch gekennzeichnet,** daß zur wahlweisen Einschaltung der Kältemittelleitung (6) in den Kreislauf des Kühl- oder Gefriergerätes ein Dreiwegeventil (20) vorgesehen ist.

10. Vorrichtung nach Anspruch 8, **dadurch gekennzeichnet,** daß die Kältemittelleitung (6) dem Verdampfer (21) eines Haushaltskühlschrankes in Strömungsrichtung des Kältemediums vorschaltbar ist.

11. Vorrichtung nach Anspruch 1, **dadurch gekennzeichnet,** daß eine die elektrische Heizvorrichtung (14) steuernde Regelschaltung (24) vorgesehen ist, wobei durch die Regelschaltung (24) die Temperatur des Kühlfingers (1) hinter der Wärmesperre (4,5) oberhalb eines unteren Grenzwertes, insbesondere oberhalb von -10°C, wenigstens annähernd konstant gehalten wird.

## Claims

1. Device for producing clear ice lumps (17), particularly for use in conjunction with refrigerators or freezers, in which a flow of water is produced in a tank (16), said flow of water flowing around cooling fingers (1) for starting the ice lumps, and in which the cooling fingers (1) are combined in a heat conducting manner with a refrigerant pipe (6) supplied with a low-temperatured refrigerant, an electric heating device (14) furthermore being provided for heating the cooling fingers (1) when releasing the clear ice lumps, characterised in that a thermal barrier (4, 5) is connected between the refrigerant pipe (6) and cooling fingers (1), and that the electric heating device (14) lies behind the thermal barrier (4, 5).

2. Device according to claim 1, characterised in that the cooling fingers (1) are composed of a metal extension piece (2) connected to the refrigerant pipe (6) and a metal finger portion (3) connected to the heating device (14), and that the thermal barrier (4, 5), made of a poor heat conducting material, is connected between the extension piece (2) and the finger portion (3).

3. Device according to claim 2, characterised in that the extension piece (2) is joined to the finger portion (3) by a poor heat conducting screwed joint (4), interposed with a heat insulating washer (5).

4. Device according to claim 3, characterised in that the heat insulating washer (5) is designed as a fastening element of the heating device (14).

5. Device according to claim 4, characterised in that the heat insulating washer (5) has recesses (7, 8, 9), in which retaining pieces (10, 11, 12) of a supporting element (13) engage in order to receive an electric heating coil (14).

6. Device according to claim 5, characterised in that the pot-shaped supporting element (13) consists of a heat insulating material.

7. Device according to claim 2, characterised in that an electric temperature sensor element (15) is arranged on the finger portion (3) lying behind the thermal barrier (4, 5).

8. Device according to claim 1, characterised in that, for preparation of the clear ice, the refrigerant pipe (6) is connected in series with the evaporator (21) of a refrigerator or freezer.

9. Device according to claim 8, characterised in that a three-way valve (20) is provided for connecting the refrigerant pipe (6) to the circuit of the refrigerator or freezer, as required.

10. Device according to claim 8, characterised in that the refrigerant pipe (6) is connectable upstream of the evaporator (21) of a domestic refrigerator in the direction of flow of the refrigerant.

11. Device according to claim 1, characterised in that a control circuit (24) controlling the electric heating device (14) is provided, the temperature of the cooling finger (1) behind the thermal barrier (4, 5) being maintained by the control circuit (24) above a lower limit value, particularly above -10°C, and at least approximately constant.

## Revendications

1. Dispositif pour la fabrication de morceaux de glace transparente (17), en particulier pour l'utilisation en combinaison avec des réfrigérateurs ou congélateurs, dans lequel on provoque dans une cuve (16) un courant d'eau qui circule autour de doigts de refroidissement (1) pour la formation de morceaux de glace, et dans lequel les doigts de refroidissement (1) sont en liaison thermoconductrice avec une conduite de fluide frigorigène (6) alimentée en fluide frigorigène à basse température, et qui comprend en outre un dispositif de chauffage électrique (14) pour le chauffage des doigts de refroidissement (1) lors du détachement des morceaux de glace transparente, **caractérisé en ce** qu'entre la conduite de fluide frigorigène (6) et les doigts de refroidissement (1) est intercalée une barrière thermique ((4, 5), et que le dispositif de chauffage électrique (14) est installé derrière la barrière thermique (4, 5).

2. Dispositif selon la revendication 1, caractérisé en ce que les doigts de refroidissement (1) sont assemblés à partir d'un ajutage métallique (2) raccordé à la conduite de fluide frigorigène (6) et d'un élément de doigt (3) métallique couplé avec le dispositif de chauffage (14), et qu'entre l'ajutage (2) et l'élément de doigt (3) est intercalée la barrière thermique (4, 5) constituée d'un matériau mauvais conducteur de chaleur.

3. Dispositif selon la revendication 2, caractérisé en ce que l'ajutage (2) est raccordé à l'élément de doigt (3) par un assemblage vissé (4) mauvais conducteur de chaleur, avec interposition d'un disque d'isolation thermique (5).

4. Dispositif selon la revendication 3, caractérisé en ce que le disque d'isolation thermique (5) est réalisé sous la forme d'un élément de fixation du dispositif de chauffage (14).

5. Dispositif selon la revendication 4, caractérisé en ce que le disque d'isolation thermique (5) présente des évidements (7, 8, 9) qui s'engagent dans des pièces de retenue (10, 11, 12) d'un élément de support (13) pour la réception d'un enroulement chauffant électrique (14).

6. Dispositif selon la revendication 5, caractérisé en ce que l'élément de support (13) en forme de pot est constitué d'un matériau calorifuge.

7. Dispositif selon la revendication 2, caractérisé en ce que sur l'élément de doigt (3) placé derrière la barrière thermique (4,5) est disposée une sonde de température électrique (15).

8. Dispositif selon la revendication 1, caractérisé en ce que, lors de la préparation de glace transparente, la conduite de fluide frigorigène (6) est montée en série avec l'évaporateur (21) d'un appareil réfrigérateur ou congélateur.

9. Dispositif selon la revendication 8, caractérisé en ce que pour l'insertion au choix de la conduite de fluide frigorigène (6) dans le circuit de fluide frigorigène de l'appareil réfrigérateur ou congélateur, il est prévu une vanne à trois voies (20).

10. Dispositif selon la revendication 8, caractérisé en ce que la conduite de fluide frigorigène (6) est montée en amont de l'évaporateur (21) d'un réfrigérateur armoire domestique, dans la direction d'écoulement du fluide frigorigène.

11. Dispositif selon la revendication 1, caractérisé en ce qu'il comprend un circuit de réglage (24) qui commande le dispositif de chauffage électrique (14), le circuit de réglage (24) stabilisant au moins approximativement la température du doigt de refroidissement (1) derrière la barrière thermique (4,5) au-dessus d'une valeur limite inférieure, en particulier au-dessus de -10°C.
